**Europäisches Patentamt**

**European Patent Office**

**Office européen des brevets**

(19)

(11) Veröffentlichungsnummer: **0 011 141**
**A1**

# EUROPÄISCHE PATENTANMELDUNG

(21) Anmeldenummer: **79103955.5**

(22) Anmeldetag: **15.10.79**

(51) Int. Cl.³: **F 01 K 3/18**
**C 12 L 7/02**

(30) Priorität: **17.10.78 DE 2845228**

(43) Veröffentlichungstag der Anmeldung:
**28.05.80 Patentblatt 80 11**

(84) Benannte Vertragsstaaten:
**BE DE GB NL**

(71) Anmelder: **Linde Aktiengesellschaft**

**D-6200 Wiesbaden(DE)**

(72) Erfinder: **Corneille, Hans-Peter**
**In der Aue 83**
**D-5000 Köln 50(DE)**

(72) Erfinder: **Haaf, Siegfried**
**Holzweg 5**
**D-5000 Köln 50(DE)**

(74) Vertreter: **Schaefer, Gerhard, Dr.**
**Linde Aktiengesellschaft Zentrale Patentabteilung**
**D-8023 Höllriegelskreuth(DE)**

(54) **Verfahren und Vorrichtung zur Nutzung der Wärme der bei der Bierherstellung anfallenden Brüden.**

(57) Die Erfindung betrifft ein Verfahren und eine Vorrichtung zur Nutzung der Wärme der bei der Bierherstellung anfallenden Brüden. Im Rahmen der Bierbereitung bilden sich beim Würzekochen Brüdendämpfe, die aus der Sudpfanne abgezogen und häufig in Pfannendunstkondensatoren gekühlt werden. Dabei wird nur ein verhältnismäßig kleiner Teil der Brüdenabwärme z.B. zur Bereitung von Warmwasser genutzt. Um die Brüdenabwärme vollständig und ohne Umweltbelastung nutzen zu können, wird erfindungsgemäß vorgeschlagen, die Brüden im Wärmetausch (6) mit dem Arbeitsmedium eines geschlossenen Kreislaufsystems zu kühlen, in dem das nach dem Wärmetausch (6) erhitzte Arbeitsmedium arbeitsleistend entspannt (3), verflüssigt (4) und auf höheren Druck gebracht (7) wird.

BEZEICHNUNG GEÄNDERT
siehe Titelseite

Verfahren zur Nutzung der Wärme der bei der
Bierherstellung anfallenden Brüden

Die Erfindung betrifft ein Verfahren zur Nutzung der Wärme
der bei der Bierherstellung anfallenden Brüden. Bei der
Bierbereitung wird unter anderem Maische in Würze und Treber
zerlegt. Nach Zugabe von Hopfen wird die Würze zur Bitterung
und Eiweißausscheidung in einer Sudpfanne 1 bis 2 Std. gekocht. Je nach Extraktgehalt muß die Würze durch Verdampfen
auf die gewünschte Stammwürze-Konzentration gebracht werden.

Beim Würzekochen bilden sich Brüdendämpfe, die aus der Sudpfanne abgezogen und häufig in Pfannendunstkondensatoren gekühlt werden, so daß die Brüdendämpfe teilweise kondensieren.
Nach dem bisherigen Verfahren dient die im Pfannendunstkondensator anfallende Wärme zur Bereitung von Warmwasser.
Dabei wird aber nur ein verhältnismäßig kleiner Teil der
Brüdenabwärme - entsprechend dem Warmwasserbedarf einer Brauerei - genutzt. Da ein Großteil der Wärmeenergie folglich
nutzlos abgeführt wird, ist diese Art der Wärmenutzung unbefriedigend und stellt darüber hinaus eine thermische Belastung sowie eine Geruchsbelästigung der Umwelt dar.

Form. 5729 7.78

Andererseits erschien es bisher als wirtschaftlich nicht sinnvoll, die in den Brüden enthaltene Wärme auf andere Art und Weise zu nutzen, zumal die Brüden-Temperaturen aufgrund unterschiedlicher Luftanteile in den Brüdendämpfen großen Schwankungen unterworfen sind.

Der Erfindung liegt die Aufgabe zugrunde, ein Verfahren zur Nutzung der Wärme der bei der Bierherstellung anfallenden Brüden zu entwickeln, mit dem die Brüdenabwärme vollständig und ohne Umweltbelastung genutzt werden kann.

Diese Aufgabe wird erfindungsgemäß dadurch gelöst, daß die Brüden im Wärmetausch mit dem Arbeitsmedium eines geschlossenen Kreislaufsystems gekühlt werden, in dem das nach dem Wärmetausch erhitzte Arbeitsmedium arbeitsleistend entspannt, verflüssigt und auf höheren Druck gebracht wird.

Der Luftanteil in den Brüden wurde bisher zum Teil als brautechnologisches Erfordernis angesehen. Heute ist bekannt, daß der Luftanteil in den Brüden unter 10 Vol-% betragen darf, ohne nachteilige Einflüsse auf den Würzekochprozeß auszuüben. Dieser Umstand wirkt sich auf die Wirtschaftlichkeit des Systems besonders vorteilhaft aus.

Es wurde festgestellt, daß mit dem erfindungsgemäßen Verfahren trotz schwankender Temperaturen der Brüdendämpfe nicht nur ein wirtschaftlicher Betrieb des geschlossenen Kreislaufsystems möglich ist, sondern auch die Wärme der Brüden optimal genutzt werden kann. Im Wärmetausch mit dem Arbeitsmedium des Kreislaufsystems werden die Brüden gekühlt, wobei ein Großteil der Brüdendämpfe kondensiert. Die dabei freiwerdende Wärme dient zum Erhitzen, Verdampfen und gegebenenfalls Überhitzen des Arbeitsmediums, das in der nachfolgenden Expansionsmaschine arbeitsleistend entspannt wird. In Abhängigkeit vom Wirkungsgrad des geschlossenen Kreislaufsystems wird so ein Großteil der in den Brüden enthaltenen Wärme in mechanische oder elektrische Energie umgewandelt. Da in jeder Brauerei Bedarf an diesen Energieformen besteht, kann mit dem vorgeschlagenen Verfahren einerseits die Wärme der Brüden genutzt und andererseits der Energiebedarf einer Brauerei reduziert werden.

Da der Wirkungsgrad des Kreislaufsystems umso besser ist, je höher die Temperatur des Arbeitsmediums vor der arbeitsleistenden Entspannung ist, wird das Arbeitsmedium nach einer vorteilhaften Ausgestaltung des Erfindungsgedankens im Wärmetausch mit einem weiteren Wärmeträger erhitzt, dessen Temperatur natürlich über der der Brüdendämpfe liegen muß. Ein derartiger Wärmeträger ist in Brauereien beispielsweise das Abgas des Heizkessels, der unter anderem zur Beheizung der Sudpfanne dient. Die im Wärmetausch mit dem Arbeitsmedium gekühlten und großteils kondensierten Brüden besitzen eine Temperatur, die noch immer über Umgebungstemperatur liegt. Daher wird der Wärmeinhalt der gekühlten Brüden zur Warmwasserbereitung genutzt. Nach dieser Kühlung im indirekten Wärmetausch mit Brau- und/oder Betriebswasser besitzen die Brüden, d.h. das Kondensat etwa Umgebungstemperatur.

Mit dem erfindungsgemäßen Verfahren gelingt daher eine vollständige Ausnutzung der in den Brüden enthaltenen Wärme ohne thermische Umweltbelastung bei gleichzeitiger Geruchsbeseitigung.

In einer Vorrichtung zur Nutzung der bei der Bierherstellung anfallenden Brüdenabwärme ist wie bisher eine Brüdendampfleitung am oberen Ende der Sudpfanne angeschlossen. Erfindungsgemäß steht diese Brüdendampfleitung mit einem Wärmetauscher in Verbindung, der neben einem Strömungsquerschnitt für die Brüden einen weiteren Strömungsquerschnitt für das Arbeitsmedium eines geschlossenen Kreislaufsystems besitzt.

Zur Nutzung der Wärme von Wärmeträgern, die eine höhere Temperatur als die Brüdendämpfe besitzen, ist nach einer Ausgestaltung des Erfindungsgedankens dem Wärmetauscher, in dem Brüdendämpfe durch das Arbeitsmedium gekühlt werden, ein weiterer Wärmetauscher, in dem Arbeitsmedium durch den Wärmeträger erhitzt wird, parallel geschaltet. Grundsätzlich ist es jedoch auch möglich, die beiden Wärmetauscher in Serie zu schalten.

Nach einer weiteren Ausgestaltung der erfindungsgemäßen Vorrichtung ist in der Brüdendampfleitung ein weiterer Wärmetauscher angeordnet, in dem die im Wärmetausch mit Arbeitsmedium gekühlten Brüden bis auf Umgebungstemperatur gekühlt werden können.

Anhand einer schematischen Skizze soll im folgenden ein Ausführungsbeispiel einer Vorrichtung zur Nutzung der Brüdenabwärme beschrieben und erläutert werden:

Am oberen Ende einer von einem Heizkessel 1 erhitzten Sudpfanne 2 ist eine Brüdendampfleitung 5 angeschlossen, die über Wärmetauscher 6 und 9 mit einem Abscheider 15 verbunden ist. Eine Leitung 10 für das Arbeitsmedium eines Kreislaufsystems verbindet den Wärmetauscher 6 über einen Abscheider 11 mit einer Turbine 3, die auf der Niederdruckseite über einen Kondensator 4 und eine Pumpe 7 wieder mit dem Wärmetauscher 6 verbunden ist. Zum Anfahren der Anlage und zum Regeln der Turbinenleistung ist der Turbine 3 ein Regelventil 12 parallelgeschaltet. Auf der Hochdruckseite des Kreislaufsystems zweigt bei Punkt 13 eine Leitung ab, die über einen Wärmetauscher 8 bei Punkt 14 an die Leitung 10 angeschlossen ist. Der Wärmetauscher 8 ist in der Abgasleitung des Heizkessels 1 angeordnet. Ist das Kreislaufsystem in Zeiten, in denen keine Würze gekocht wird, nicht in Betrieb, können die Abgase durch die Leitung 18 geführt werden. Durch diese Maßnahme wird eine auf die hohen Temperaturen des Abgases zurückzuführende thermische Zersetzung des Arbeitsmediums vermieden. Während des Würzkochens in der Sudpfanne 2, die z.B. mit Dampf aus dem Heizkessel 1 beheizt wird, entstehen Brüden, die mit einem Luftanteil von z.B. 10 Vol-% und einer Temperatur von ca. 95°C über die Abdampfleitung 5 zum Wärmetauscher 6 geleitet werden. Im Wärmetausch mit verdampfendem Arbeitsmedium werden die Brüden auf ca. 85°C gekühlt, wobei pro kg Wasserdampf ca. $1,95 \cdot 10^6$ J abzüglich Strahlungsverluste zur Verdampfung des Arbeitsmediums zur Verfügung stehen. Im Wärmetauscher 9 werden die Brüden gegen anzuwärmendes Brau- und/oder Betriebswasser auf ca. 20°C abgekühlt und im Abscheider 15 in Luft und Kondensat zerlegt. Die Luft wird über Leitung 16 und das Kondensat über Leitung 17 aus dem Abscheider 15 entfernt.

Im Wärmetauscher 6 wird lediglich ein Teilstrom des Arbeitsmediums erhitzt. Der andere Teilstrom wird bei Punkt 13 abgezweigt und im Wärmetausch mit Abgasen des Heizkessels 1 im Wärmetauscher 8 erhitzt. Die beiden erhitzten Teilströme werden bei Punkt 14 vereinigt, in einem Abscheider 11 von Flüssigkeit befreit und der Turbine 3 zugeführt. Die bei der arbeitsleistenden Entspannung gewonnene Energie kann direkt zum Antrieb von Arbeitsmaschinen, z.B. Pumpen oder Kälteverdichtern oder zur Gewinnung elektrischer Energie verwendet werden. Das entspannte Arbeitsmittel kondensiert im Kondensator 4, der z.B. mit Wasser und/oder Luft von Umgebungstemperatur gekühlt wird. In Pumpe 7 wird das kondensierte Arbeitsmedium erneut auf Verdampfungsdruck gebracht und den beiden Wärmetauschern 6 und 8 zugeleitet.

Form. 5729 7.78

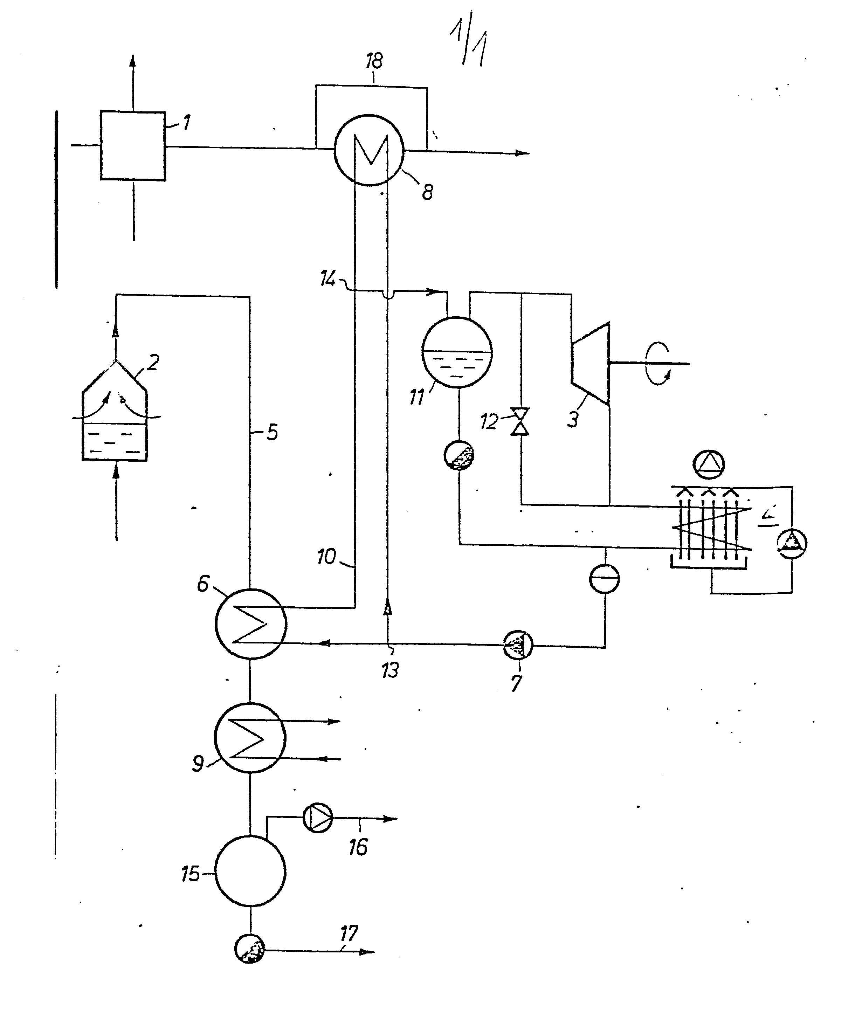

## Patentansprüche

1. Verfahren zur Nutzung der Wärme der bei der Bierherstellung anfallenden Brüden, dadurch gekennzeichnet, daß die Brüden im Wärmetausch mit dem Arbeitsmedium eines geschlossenen Kreislaufsystems gekühlt werden, in dem das nach dem Wärmetausch erhitzte Arbeitsmedium arbeitsleistend entspannt, verflüssigt und auf höheren Druck gebracht wird.

2. Verfahren nach Anspruch 1, dadurch gekennzeichnet, daß das Arbeitsmedium im Wärmetausch mit einem weiteren Wärmeträger erhitzt wird.

3. Verfahren nach Anspruch 2, dadurch gekennzeichnet, daß es sich bei dem weiteren Wärmeträger um Heizkessel-Abgas handelt.

4. Verfahren nach einem der Ansprüche 1 bis 3, dadurch gekennzeichnet, daß die gekühlten Brüden im Wärmetausch mit Brau-und/oder Betriebswasser zusätzlich gekühlt werden.

Form. 5729 7.78

5. Verfahren nach einem der Ansprüche 1 bis 4, dadurch gekennzeichnet, daß als Arbeitsmedium Difluordichlormethan, Trichlormonofluormethan, Trifluortrichloräthan oder Tetrafluordichloräthan verwendet wird.

6. Vorrichtung zur Durchführung des Verfahrens nach einem der Ansprüche 1 bis 4 mit einer Sudpfanne, an deren oberen Ende eine Brüdendampfleitung angeschlossen ist, dadurch gekennzeichnet, daß in der Brüdendampfleitung 5 ein Wärmetauscher 6 mit einem Strömungsquerschnitt 10 für das Arbeitsmedium eines aus einer Entspannungsmaschine 3, einem Kondensator 4 und einer Pumpe 7 bestehenden Kreislaufsystems angeordnet ist.

7. Vorrichtung nach Anspruch 6, dadurch gekennzeichnet, daß der Wärmetauscher 6 und ein weiterer Wärmetauscher 8 arbeitsmittelseitig in Serie geschaltet sind.

8. Vorrichtung nach Anspruch 6 oder 7, gekennzeichnet durch einen Wärmetauscher 9, der dem in der Brüdenleitung 5 angeordneten Wärmetauscher 6 bezüglich der Strömungsrichtung der Brüden nachgeschaltet ist.

9. Vorrichtung nach einem der Ansprüche 6 bis 8, dadurch gekennzeichnet, daß die Expansionsmaschine 3 eine Radialturbine oder eine Schraubenexpansionsmaschine ist.

10. Vorrichtung nach einem der Ansprüche 6 bis 9, dadurch gekennzeichnet, daß der Kondensator 4 ein wasser- oder luftgekühlter Kondensator oder ein Verdunstungskondensator ist.

Europäisches
Patentamt

**EUROPÄISCHER RECHERCHENBERICHT**

0011141
Nummer der Anmeldung

EP 79 10 3955

| Kategorie | Kennzeichnung des Dokuments mit Angabe, soweit erforderlich, der maßgeblichen Teile | betrifft Anspruch |
|---|---|---|
| | <u>CH - A - 460 815</u> (BASF)<br>* Spalte 4, Zeilen 21-67; Spalte 5, Zeilen 1-59; Figuren * | 1,2,5,<br>6,7,9 |
| | -- | |
| | <u>US - A - 4 109 469</u> (CARSON)<br>* Spalte 3, Zeilen 54-68; Spalte 4; Spalte 5, Zeilen 1-29; Figuren * | 1-3,5-<br>7 |
| | -- | |
| | <u>DE - C - 538 072</u> (GEBHARDT)<br>* Seite 1, Zeilen 1-22 * | 1 |
| | ---- | |

**KLASSIFIKATION DER ANMELDUNG (Int.Cl. 3)**

F 01 K 3/18
C 12 L 7/02

**RECHERCHIERTE SACHGEBIETE (Int. Cl. 3)**

F 01 K
C 12 L
C 12 C

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-01-1980 | V. GHEEL |

EPA form 1503.1  06.78